# EUROPEAN PATENT SPECIFICATION

(11) **EP 4 111 858 B1**
(45) Date of publication and mention of the grant of the patent: **06.08.2025**
(21) Application number: 21182430.5
(22) Date of filing: 29.06.2021
(51) Int. Cl.: A01L 3/00, A01K 13/00, A01L 5/00

(54) **REMOVABLE HORSE SHOE**
ABNEHMBARES HUFEISEN
FER À CHEVAL AMOVIBLE

(43) Date of publication of application: 04.01.2023
(73) Proprietor: Equine Fusion AS, 4031 Stavanger (NO)
(72) Inventor: Revheim, Sven Erik, 4007 Stavanger (NO); Revheim, Sven, 4042 HAFRSFJORD (NO)
(74) Representative: Håmsø Patentbyrå AS

(56) References cited:
- EP-A1- 3 103 331
- WO-A1-00/54577
- WO-A1-2014/134721
- FR-A- 774 447
- US-A1- 2020 000 076

## Description

### FIELD OF THE INVENTION

The invention relates to a shoe for a foot of a hoofed or cloven-hoofed animal, the shoe comprising a sole for being mounted to an under side of the hoof of said animal. Also disclosed is an elastic clipping element for use with such shoe.

### BACKGROUND OF THE INVENTION

Metal shoes that are nailed into the hoof are the most commonly used horse hoof protection in the field today. Such metal shoes have been used for centuries. Several years ago new developments were launched into the market. Hoof boots that are not nailed to the hoof but taken on and off, as desired, have now been a hoof-protection alternative for many years and are taking an ever-increasing market share from the metal shoe. This is also stimulated by an increasing knowledge sharing about and stronger focus on the well-being of the horse.

Another group of shoes that came into the market during these years are the so-called "glue-on" alternatives, which basically are different variations of lower model plastic shoes that are glued on the hoof capsule, which are supposed to last for some weeks. An example of a patent disclosing such shoe is US4,155,406A.

The current applicant has been active developing horse shoes for many years. Over the years they developed different variations of Velcro/tightening band hoof boots to put on and off as desired by the horse owner. Examples of patents disclosing these shoes are: EP2,618,654B1; EP2,257,153A1 and EP2,774,480A1. Science has been describing the disadvantages with permanent mounting horse shoes onto the hoof, in particular when this happens for a longer time, i.e. several months. Several solutions to solve this problem have been proposed. Some have tried to solve this problem by chemically locking the shoe to the hoof, but this has the problem of the shoe being locked to the hoof for long time periods (even more than a month).

Other known technologies try to solve the earlier-mentioned problems by having hoof shoes mounted on hoofs by enclosing the hoof capsule and above the coronary band with a locking mechanism. However, the result of this solution is the risk of blisters and possible injuries due to moving of sensitive joints inside the shoe.

Another known problem is the twisting of hoof boots. The hoof twists inside the shoe, and causing the shoe to fall off, or injure the horse.

Science shows that the hoof needs to be able to move in 4 directions, namely in a downwards direction during landing, in an outward direction to activate blood flow and dampening of forces in hoof and body, in a forward direction to dampen the stop motion, and rotary direction, i.e., a twisting rotation direction, during lifting of the hoof.

All hoof boots made today consist of a tightening mechanism. This mechanism is tightening the shoe to fit the hoof and to tightening the locking mechanism to prevent the shoe from falling off. The problem with this mechanism is that it is vulnerable for wear and tear and failure resulting in shoes falling off. It also limits the fit of the shoe during assembly, making it more difficult to install. Each tightening/locking mechanism tends to be unique, i.e., it is designed for a specific shoe and model, which limits the flexibility of using other shoes for other use of the horse.

FR774447A discloses a shoe for a hoof of an animal.

US7,578,115B2 discloses a horse boot including a shell for a hoof and a gaiter for the pastern. The shell has a sole, an upper, a tongue, and an elastic strap for tightening the upper and the tongue around the hoof of a horse. The gaiter is releasably attached to the upper so as to extend around the rear of the shell and can be wrapped around the pastern of the horse immediately above the hoof's hairline and below the fetlock to function as a barrier against the entry of debris into the shell. The gaiter provides an additional anchor to retain the shell in place under extreme conditions of use. The releasable connection to the shell allows replacement of the gaiter when worn out. In the horse boot a tightening mechanism is fastened in separate part at the front of the shoe. The tightening mechanism is attached to partly-split sidewalls which also enclose the heel section of the hoof. Gripping elements are anchored to the part of the sidewalls which are tightened by the tightening mechanism. When tightening the tightening mechanism, the part of the circle which is connected to the tightening mechanism will decrease in diameter while enclosing the hoof. The gripping elements bite against the hoof wall with the hoof moving backwards and upwards. The gripping elements are mounted on the inside of the non-flexible sidewall, and the hoof movement adds force on the heel, the sidewalls and the heel are rigid, such that the horse boot does not allow for a constant dynamic force on the gripping elements. Further this horse boot describes a tightening mechanism which adds force in the front and further transfers this force via a partial circle surrounding parts of the hoof. This means that during tightening friction forces need to be over and as a result the force against the gripping elements will be minimal. The horse boot is designed in such a way that the hoof and the gripping elements will move separately from each other. As a result the shoe is very likely to fall off during use or the use of gaiter is required.

In view of the above-described problems there is a further need to develop shoes for horses. Clearly, there is a further need to try to combine the benefits of each of the solutions that exist. Furthermore, there is a need to provide a better solution for meeting the five Degrees-of-Freedom for horseshoes (shoes for animals).

### SUMMARY OF THE INVENTION

The invention has for its object to remedy or to reduce at least one of the drawbacks of the prior art, or at least provide a useful alternative to prior art.

The object is achieved through features, which are specified in the description below and in the claims that follow.

The invention is defined by independent patent claim 1. The dependent claims define advantageous embodiments of the invention.

The invention relates to a shoe for a hoof of an animal in accordance with claim 1.

The effects of the features of the shoe in accordance with the invention are as follows. First of all, the fixation areas that are provided on opposite sites of the hoof are fixed in position relative to the hoof by the protruding elements that penetrate into the hoof when the shoe is applied. That is to say during use of the shoe the relative position of these fixation areas remains the same. Second, the fixation areas are each connected with the sole by at least one elastic connection. This connection may be direct, when the elastic connection connects the fixation area with the sole (which may be integrated into the sidewall in some embodiments), or indirect, when the elastic connection connects the fixation area to a different part than the sole, which on its turn is connected to the sole. This may for example, but not according to the claimed invention, be a sidewall of the shoe connected to the fixation area by an elastic connection that is not itself part of the sidewall. Either way, what is important is that the connection between the fixations points and the sole as a whole is elastic, that is that at least part of this connection must be elastic and there may be parts (such as a non-elastic sidewall) that are not elastic. The consequence of these features is that the hoof can move relative to the sole during the landing and roll-over phase, which reduces the shock and stress applied to the fixation areas and the hoof. The shoe in accordance with claim 1 is in fact an intermediate product, because it will need a mechanism to really keep the fixation areas in place all the time. In the prior art solutions reported so far there is always a tightening mechanism required to make sure the shoe does not fall from the hoof. However, in the current invention such tightening mechanism is no longer required. Instead, it suffices to have a simple elastic clipping element that applies an inwardly-directed pressure on the fixation areas, which will keep the fixation areas in place. And that in combination with the elastic connections between the fixation areas and the sole will result in a shoe which is nicely kept in place, while at the same time meeting, due to the above-described elasticity, the earlier-mentioned five Degrees-of-Freedom for animals (such as horses). In particular the fifth Degree-of-Freedom, i.e. exchangeability of the shoe, is met in a manner that has not been reported in the prior art before. More information on the five Degrees-of-Freedom and especially the fifth Degree-of-Freedom is given in the detailed description. In summary, the shoe of the invention provides for easy and fast mounting on the hoof of the animal and effectively combines flexible or non-flexible sole technology with glue-free and tightening-free technology. It goes without saying that using flexible and/or elastic materials for the sole will increase the comfort of the animal as it will dampen the forces on the joints of the legs of the animal and it will also prevent objects from hurting the foot of the animal when standing on it. A common material that may be used is rubber. But there are other flexible and/or elastic materials also possible including combinations of plastic and rubber. Furthermore, The shoes has a sidewall either made from a soft material (leather or rubber). The elastic connections are integrated into the sidewall.

Here the elastic connections are effectively part of the sidewall. The sidewall comprises a peripheral wall having a predefined receiving recess which matches the size and shape of an elastic clipping element in operational use of the shoe, wherein, in operational use, the elastic clipping element extends from a front side of the shoe and covers the fixation areas for applying by an internal pretension force in the elastic clipping element an inwardly-directed pressure on the fixation areas for pressing the protruding elements into the hoof.

The shoe can theoretically be used in combination with a tightening system, which covers the fixation areas and presses them into the hoof in operational use. However, the shoe in accordance with claim 1 represents the perfect solution as it renders the need for a tightening system completely superfluous. A simple elastic clipping element that is applied from a front side, where the hoof is thickest, applies the necessary inward pressure on the fixation areas and will hold the shoe in place.

Another great advantage of the shoe of the invention is that the shoe does not require any contact with the sensitive areas of the hoof during the whole stride of the horse. This problem has been extensively researched, see for instance the following reference:
- Sarah Jan Hobbs et al. (2014) "Equine surfaces - white paper", first edition, Publisher: Federation Equestre Internationale, https://www.researchgate.net/publication/261135115*.*

In order to facilitate understanding of the invention one or more expressions are further defined hereinafter.

Wherever the word "shoe" is used, this must be interpreted as including boots as well. Wherever the wording "animal" is used, this must be interpreted as all hoofed and cloven-hoofed animals, including horses, ponies, mules, donkeys, and the like. The focus on horses through the application does not exclude the applicability to other animals. Wherever the word "foot" is used, this must be interpreted as the far end of a leg of the animal, also being referred to as the hoof of the animal.

Wherever the wording "tightening" is used, this must be interpreted as equivalent to "strapping" or "tensioning". All these words concern the action of fixing the shoe tighter to the hoof of the animal.

In an embodiment of the shoe in accordance with invention the each fixation area is connected to the sole by at least two elastic connections per fixation area. Using at least two elastic connections per fixation area with each elastic connection being preferably connected to a different connection location on the sole will result in more stability, i.e., the shoe will be kept better in place. Preferably one elastic connection of the at least two elastic connections is connected at a rear side of the shoe and the other one is connected to a location more towards the front. In this way, when using two fixation areas each having two elastic connections with the sole the connection locations are distributed along the circumference of the shoe, which results in the best stability. In the detailed description an embodiment for implementing this is presented and discussed in more detail.

In an example not according to the claimed invention the elastic connections are connected with the sidewall for establishing the connections between the fixation areas and the sole. The elastic connections are not essentially part of the sidewall, but rather connect the fixation areas to the sidewall and thereby indirectly to the sole. The sidewall in this embodiment may comprise both hard and soft materials, which is a clear design freedom this embodiment advantageously provides.

In an embodiment of the shoe in accordance with the invention the sidewall comprises a peripheral wall, wherein the peripheral wall comprises openings on opposite sides for defining the elastic members at a rim side of the sidewall. This embodiment conveniently implements the elastic members in the sidewall by providing openings in the sidewall for defining the elastic connections. The detailed description of the drawings will give further details of this embodiment.

In an embodiment of the shoe in accordance with the invention the sidewall covers at least part of a frontside of the hoof, in operational use. The front side of the hoof is typically a surface which is tilted backward and therefore very suitable for being received in the sidewall of a shoe. This provides stability and effectively holds the shoe in place together with the fixation areas that are connected with the connection locations of the sole (via the elastic members).

In an embodiment of the shoe in accordance with the invention a rear height of the sidewall is lower than a front height of the sidewall. In some embodiments the rear height is just a few millimetres whereas the front height is such that the front side of the hoof is substantially covered. This embodiment makes the shoe look more like a sandal for humans, where the foot can conveniently enter the shoe from the rears side.

In an embodiment of the shoe in accordance with the invention each fixation area comprises at least two protruding elements placed side-by-side. Providing more protruding elements per fixation area keeps the fixation area better fixed relative to the hoof rotation-wise. Alternatively, a larger protruding element covering substantially the same area may be used. This will achieve the same effect of preventing rotation of the fixation area relative to the hoof.

In a further embodiment the backside of the shoe may be provided with a heel cap for preventing stones and dirt to enter the shoe from the backside.

In an embodiment of the shoe in accordance with the invention the shoe comprises the elastic clipping element.

In an embodiment of the shoe in accordance with the invention the elastic clipping element is U-formed having a first leg and a second leg connected to the first leg via a connecting part, wherein ends of the legs are spaced apart with a predefined distance. This embodiment comprises a convenient implementation of the clipping element. The U-formed elastic clipping element may be easily integrated as a removable part of the shoe or as an integrated part in the shoe, which may require manual handling during mounting and demounting of the shoe (optionally using a tool). In an alternative embodiment the clipping element encloses a larger part or a full part of the hoof. What is important is that the clipping element is designed such that the legs can at least be bent outwardly to create room for being applied to the hoof. Also, it should be designed with such as a size and shape that it applies an inward-directed pressure on the fixation areas after application of the clipping element on the hoof. In case of a clipping element forming a full enclosure (having a hoop form) of the hoof in operational use the backside of the clipping element may comprise a pivotable arm that closes the hoop by releasable attaching to the other end of the clipping element.

In an embodiment of the shoe in accordance with the invention the connecting part comprises a joint for allowing pivoting of the legs. This embodiment is advantageous when the elasticity of the elastic clipping element is too limited for creating the required room to apply the clipping element around the hoof from one side. The pivotable connection between the legs will allow for a temporary widening of the legs during application and removal of the clipping element.

In an embodiment of the shoe in accordance with the invention the predefined distance between the legs of the elastic clipping element is adjustable by setting a pivot angle between the legs for allowing easy placement and removal as well as setting the inwardly-directed pressure on the friction areas. This embodiment builds further on the previously mentioned embodiment and effectively allows control of the pivot angle. The pivotable may, for example, be set by a screw extending through both legs just around the joint. The detailed description will provide more details about this embodiment.

In an embodiment of the shoe in accordance with the invention the shoe is completely free of tightening bands or other tightening mechanisms. Tightening band free shoes as rendered possible by the current invention provide for a very large comfort level for the animal. At the same time, the mounting and demounting of the shoes may happen very fast, which further increases the comfort of the animal (especially during mounting and demounting of the shoes).

Also disclosed, but not part of the claimed invention, is a mounting tool configured for being used together with the elastic clipping element used in claims 6 to 9. The mounting tool is configured for receiving and holding the elastic clipping element for i) temporarily stretching said elastic clipping element for temporarily reducing the internal pretension force and for ii) temporarily squeezing the elastic clipping element for temporarily applying an extra inwardly-directed pressure on the fixation areas. The required elastic forces (setting the pretension forces) of the elastic clipping element may be too large for manual handling by a person. The mounting tool will help to bend the legs of the clipping element outwardly during mounting or demounting of the shoe. More details of the mounting tool are provided in the detailed description of the drawings.

### BRIEF INTRODUCTION OF THE DRAWINGS

In the following is described examples of preferred embodiments illustrated in the accompanying drawings, wherein:
- Fig. 1: shows a first embodiment of a shoe for a hoof of an animal in accordance with the invention, wherein the shoe comprises a mounting part and a clipping element;
- Fig. 2: shows the mounting part of the shoe of Fig. 1 and illustrates an important aspect of the invention;
- Fig. 3: shows the clipping element of the shoe of Fig. 1;
- Fig. 4: illustrates how the clipping element is applied to the mounting part seen from a first viewpoint;
- Fig. 5: illustrates how the clipping element is applied to the mounting part seen from a second viewpoint, wherein the shoe has been mounted on a hoof of an animal;
- Fig. 6: illustrates the shoe of Fig. 5, wherein the clipping element has been fully mounted on the hoof, and illustrates further important aspects of the invention;
- Fig. 7: shows a mounting tool;
- Fig. 8: shows the mounting tool of Fig. 7 holding a clipping element in accordance with the invention;
- Fig. 9: shows a final stage of a method of mounting the clipping element to the mounting part of the shoe using the mounting tool;
- Fig. 10: shows an early stage of the method of mounting the clipping element to the mounting part of the shoe using the mounting tool;
- Fig. 11: shows a further stage of the method of mounting the clipping element to the mounting part of the shoe using the mounting tool;
- Fig. 12: shows yet a further stage of the method of mounting the clipping element to the mounting part of the shoe using the mounting tool, yet still being a stage before the stage of Fig. 9;
- Fig. 13: shows a second embodiment of a shoe for a hoof of an animal in accordance with the invention, and
- Fig. 14: shows a third embodiment of a shoe for a hoof of an animal in accordance with the invention.

### DETAILED DESCRIPTION OF THE EMBODIMENTS

Various illustrative embodiments of the present subject matter are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The present subject matter will now be described with reference to the attached figures. Various systems, structures and devices are schematically depicted in the drawings for purposes of explanation only and so as to not obscure the present disclosure with details that are well known to those skilled in the art. Nevertheless, the attached drawings are included to describe and explain illustrative examples of the present disclosure. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

The purpose of the invention is to combine the benefits of existing horseshoes and to further improve the shoe, where possible.

The earlier-mentioned five Degrees-of-Freedom are technical freedoms that are important for a horse. The first four Degrees-of-Freedom concern directions of movement (force vectors) and the fifth is about providing the rider freedom to decide when and how to minimize the load on the horse. The first four freedoms are related to how the horse feels the ground ensuring balance and stability. This is important for the safety for both the horse and the rider (connect with your horse from the ground and up). All the five freedoms are about the horse's welfare and soundness.

Ideally horses should be barefoot as nature intended, but sometimes the hoof needs to be protected depending on how the horse is used and on the condition of the hoof. A hoof boot or horseshoe (anything that is installed on a hoof) should allow the hoof to work as nature intended by impeding the biomechanical functioning of the hoof as little as possible.

The five Degrees-of-Freedom for (horse)shoes for animals are defined as follows:
1. Downwards - the need for dampening (sink into the contact surface/ use entire hoof area).
2. Forward - the need for slide/strike movement (just the right amount of grip).
3. Sideways (outwards both sides at the heel) - the need to secure natural blood flow and dampening.
4. Torsion - the need for the hoof to twist freely at contact with the ground.
5. Take Jogging Shoe on/ off - the ability to use the horseshoe only when needed and the ability to select a specific tailor-made solution for each application.

The invention provides a convenient solution meeting all five Degrees of Freedom and will be discussed in more detail with reference to the figures.

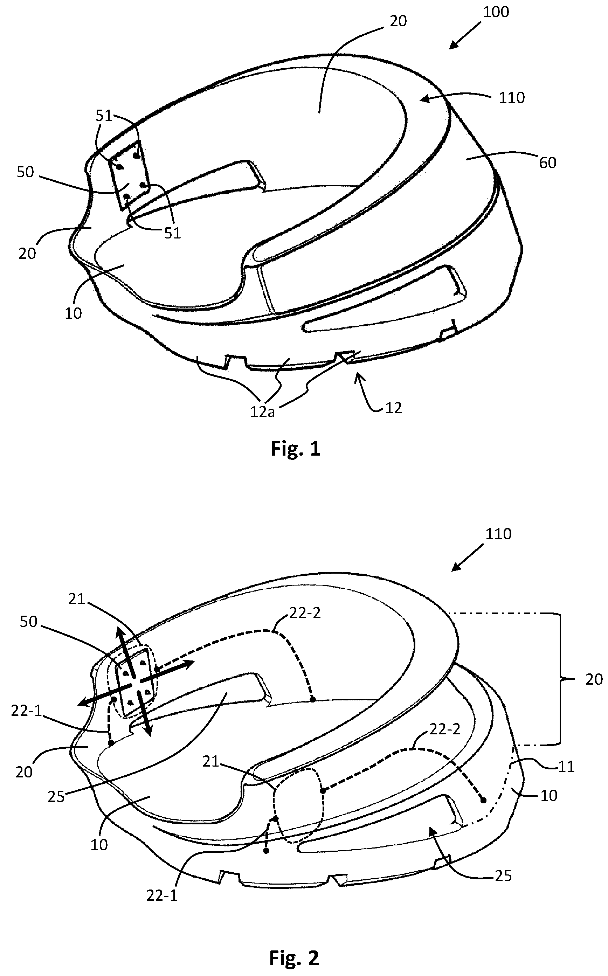

Fig. 1 shows a first embodiment of a shoe 100 for a hoof of an animal in accordance with the invention, wherein the shoe 100 comprises a mounting part 110 and a clipping element 60.The mounting part 110 comprises a sole 10 having a sidewall 20 for defining a space for receiving the hoof (not shown) of the animal. The figure further shows a protruding element 50 provided on an inside of the sidewall 20, that is on a side that face the hoof of the animal. On the opposite side of the sidewall 20 there is another protruding element 50, which is not visible in the drawing. The protruding element 50 in this provided comprises four protruding needles/pins 51, one at each corner. This may be typically a few mm length. The sole 10 may comprise flexible and/or materials such as rubber, but other flexible materials are also possible. Any resilience in the material will contribute to the comfort of the animal, when wearing the shoes. The sole 10 comprises a bottom part 12 comprising a profile at an underside thereof. The profile defines studs 12a as illustrated, which increases traction on various surfaces.

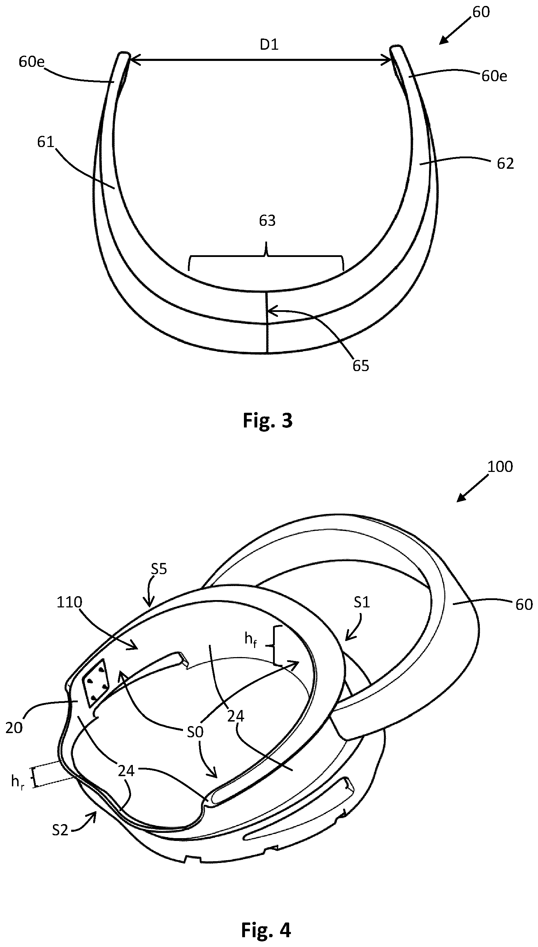

Fig. 2 shows the mounting part of the shoe 100 of Fig. 1 and illustrates an important aspect of the invention. The earlier-mentioned elastic clipping element 60 has been taken away from the shoe 100. The figure illustrates how the earlier-mentioned protruding elements 50 are effectively part of a fixation area 21, which has been schematically illustrated by means of dashed enclosures 21 in the drawing. A core element of the invention is that these fixation areas 21 are connected to the sole 10 via elastic connections 22-1, 22-2 as illustrated the dashed lines from the fixation areas 21 to the sole 10. This elasticity of the elastic connections 22-1, 22-2 allows for movement of the fixation areas 21 relative to the sole as illustrated by the thick black arrows. Another important aspect is that the fixation areas 21 are fixed in position in operational relative to the hoof (not shown) of the animal (not shown). The latter is enabled by the use of the protruding needles/pins 51 as discussed in Fig. 1, but also by a so-called elastic clipping element as will be discussed with reference to Fig. 3. The invention provides for some further significant advantages.

The first advantage is that the combination of the fixation areas 21 and the flexible connections 22-1, 22-2 and the elastic clipping element 60 enables the shoe to adjust itself to various hoof sizes and hoof forms. The reason for this is that the flexible connections 22-1, 22-2 allow for the fixation areas 21 to be pressed against the hoof by the elastic clipping element 60 even if the hoof size and shape is a bit different (i.e. larger or smaller). A second advantage is that the forces applied by fixation areas 21 to the hoof are reduced due to the flexibility of the flexible connections 22-1, 22-2. These forces can be quite large during the lifting up of the shoe and pressing down of the shoe (during walking).

It may be understood that there are many ways to implement the elastic connecting 22-1, 22-2 between the fixation areas 21 and the sole. In the current embodiment the elastic connections 22-1, 22-2 are made in the sidewall 20 of the shoe 100, wherein the sidewall 20 is made of elastic material also, such as rubber. The sole 10 and the sidewall 20 may even be made of one-piece as in the current embodiment. Nevertheless, in accordance with the invention the sole 10 is defined as the part that extends horizontally when the shoe 100 stands on a horizontal surface and the sidewall 20 is defined as the vertically extending part that is connected to the sole 10. In Fig. 2, the interface between these two parts has been schematically illustrated by the dashed line 11 at the frontside of the shoe 100. When the sidewall 20 is made of elastic material as in the current embodiment the necessary elasticity of the elastic connections 22-1, 22-2 is obtained by making opening 25 in the sidewall 20 as illustrated.

Fig. 3 shows the clipping element 60 of the shoe 100 of Fig. 1.The clipping element 60 in accordance with the current embodiment comprises a first leg 61 and a second leg 62 connected to the first leg 62 via a connecting part 63 as illustrated. The shape of the clipping 60 is designed to match with the shape of the shoe of Fig. 2, which on its turn is designed to substantially match with the shape of the hoof of the animal that is to wear the shoe 100. Ends 60e of the respective legs 61, 62 are designed such that there is a predefined distance D1 between them. The clipping element 60 is designed with a certain level of elasticity. This predefined distance D1 is chosen to be smaller than the dimension of the shoe 100 such that, when applied to the shoe 100 with the hoof placed in it in operational use, the elasticity of the clipping element 60 applies an inwardly-directed pressure (a pretension) on the shoe 100 and on the protruding elements 50. Some embodiments of the elastic clipping element 60 comprise a joint 65, for instance in the connecting part 63 as schematically illustrated in Fig. 3. This joint 65 may be used to allow for temporarily widening the legs 61, 62 such facilitates application of the clipping element 60 on the shoe 100.

Fig. 4 illustrates how the clipping element 60 is applied to the mounting part 110 seen from a first viewpoint. It illustrates that the sidewall 20 comprises a peripheral wall 24 having a predefined receiving recess which matches the size and shape of the clipping element 60, i.e., the clipping element 60 can be provided from a front side S1 of the shoe 100 as illustrated. The figure further illustrates some design aspects of the peripheral wall 24, which has a front height hf at the front side S1 which is larger than a rear height hr on the rear side S2 as illustrated. In fact, the peripheral wall at the rear side S2 in this embodiment is only a few millimetre heigh, which turns the shoe 100 into something which resembles the sandal for humans. It must be stressed that such design is rendered possible by the current invention only, as the conventional shoes for animals all require tightening mechanisms, which require the peripheral wall 24 at rear side of the shoe 100 to be high as well. Fig. 4 further illustrates what is meant with an inner side S0 and the rim side S5 of the shoe 100 as referred to in the claims.

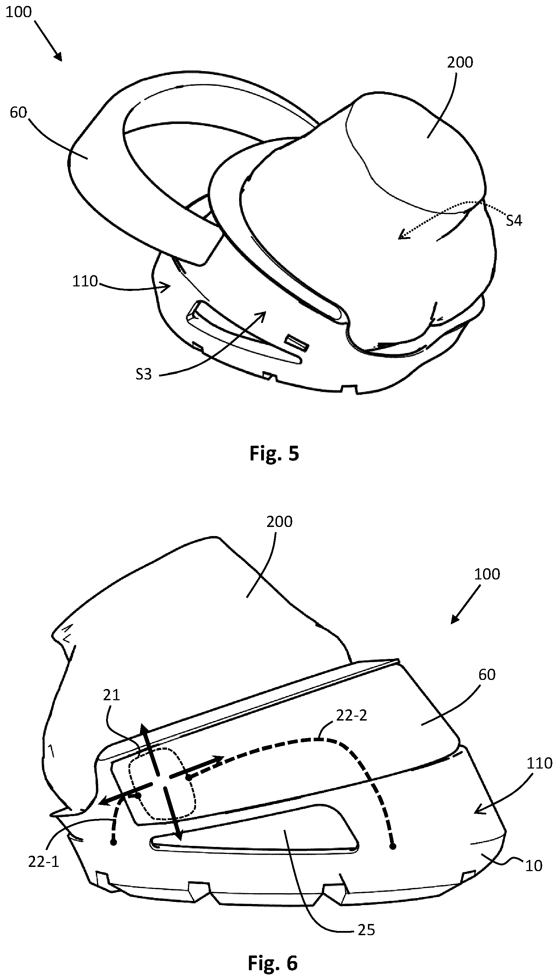

Fig. 5 illustrates how the clipping element 60 is applied to the mounting part 110 seen from a second viewpoint, wherein the shoe 100 has been mounted on a hoof 200 of an animal. This figure illustrates what is meant with the opposite sides S3, S4 of the hoof as referred to in the claims.

Fig. 6 illustrates the shoe 100 of Fig. 5, wherein the clipping element 60 has been fully mounted on the hoof 200 and illustrates further important aspects of the invention. With reference to the description of Fig. 2, it is mentioned here that when the shoe 100 has been provided on the hoof 200 and the clipping element 60 has been applied to the mounting part 110 of the shoe 100, the clipping element 60 ensure that the fixation areas 21 by the protruding elements (not visible in the drawing) are kept fixed relative to the hoof 200. This means that the earlier arrows in Fig. 2, which are repeated in this drawing, effectively illustrate the movement freedom of the hoof 200 relative to the shoe 100, which provides the earlier described required Degrees-Of-Freedom for a shoe 100 for an animal. And this is made possible by the earlier-described elastic connections 22-1, 22-2 between the fixation areas 21 and the sole 10.

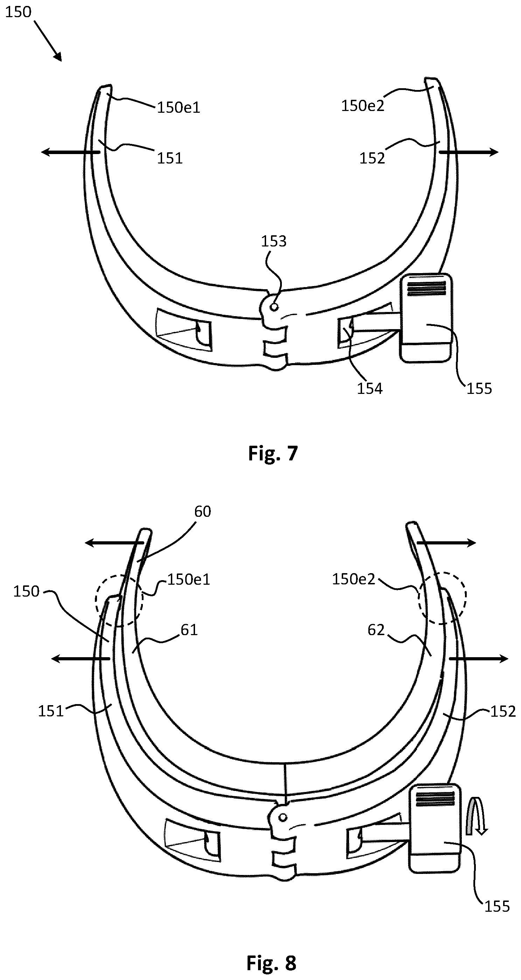

Fig. 7 shows a mounting tool 150. Even though the shoe 100 in accordance with the invention may be applied manually without requiring any tools the inventors, nevertheless, developed such mounting tool 150 to facilitate the mounting of the elastic clipping element 60 to the mounting part 110 of the shoe 100. This may be convenient in those cases that the elastic clipping element 60 is designed for large pretension forces requiring a lower elasticity and thus also requiring larger forces to bend the legs 61, 62 of the clipping element 60 outwardly. This is particularly important when removing the shoe because the clipping element 60 is then less accessible for human hands.. The mounting tool 150 has a shape which complies with the shape of the clipping element 60 in that it may receive this clipping element 60 on an inside thereof. The mounting tool 150 has a first leg 151 and a second leg 152 that are connected by a joint 153 as illustrated. A pivot angle of the joint 153 is controlled by an angle adjustment mechanism 154, which may be a bolt-and-nut configuration as shown. Rotation of the nut relative to the bolt will cause the pivot angle to be modified, i.e., the legs 151, 152 to be pivot outwardly as illustrated by the thick black arrows. The nut may be connected with an adjustment knob 155 for facilitating rotation by a human hand (not shown).

Ends 150e1, 150e2 of the legs 151, 152 may be configured for being mounted to the legs 61, 62 of the clipping element.

Fig. 8 shows the mounting tool 150 of Fig. 7 holding a clipping element 60 in accordance with the invention. The earlier mentioned ends 150e1, 150e2 of the legs 151, 152 of the mounting tool 150 may grip and hold or may be temporarily attached to the legs of the clipping element 60). Either way, when the adjustment knob 155 of the mounting tool 150 is rotated as illustrated by the arrow the legs of the mounting tool 150 move outwardly pulling the legs of the clipping element 60 outwardly as well.

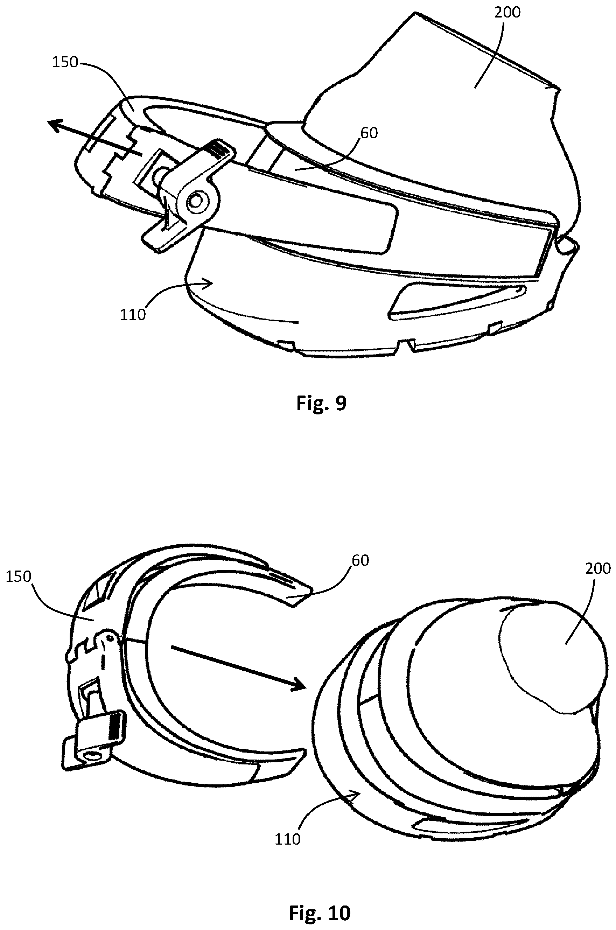

Fig. 9 shows a final stage of a method of mounting the clipping element 60 to the mounting part 110 of the shoe 100 using the mounting tool 150. The mounting part 110 has already been provided on the hoof 200 as illustrated. The mounting tool 150 is pulled in the direction of the black arrow and the clipping element 60 remains on the shoe 100.

Fig. 10 shows an early stage of the method of mounting the clipping element 60 to the mounting part 110 of the shoe 100 using the mounting tool 150. The clipping element 60 is held by the mounting tool 150 while the legs are pulled outwardly to create space for application on the mounting part 110. The combination of the mounting tool 150 and the clipping element 60 is moved in the direction of the shoe 100 as illustrated by the black arrow.

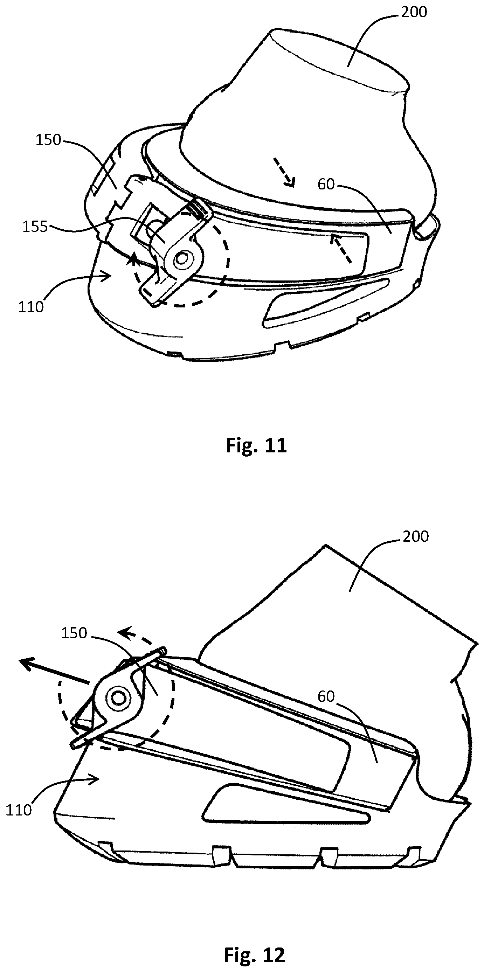

Fig. 11 shows a further stage of the method of mounting the clipping element 60 to the mounting part 110 of the shoe 100 using the mounting tool 150. This drawing serves to illustrate that the mounting tool 150 may be used to apply an extra inwardly-directed pressure on the fixation areas (not shown) during mounting of the shoe 100. The adjustment knob 155 may be rotated to pressing the legs of the mounting tool 150 more inwardly applying an extra inwardly-directed pressure (as illustrated by the dashed-arrows) on the legs of the clipping element 60, which on their turn press the protruding elements of the fixation areas into the hoof 200 of the animal.

Fig. 12 shows yet a further stage of the method of mounting the clipping element 60 to the mounting part 110 of the shoe 100 using the mounting tool 150, yet still being a stage before the stage of Fig. 9. The legs of the mounting tool 150 have been released from the legs of the clipping element 60 and the mounting tool 150 is pulled away from the shoe in the direction of the black arrow in the drawing.

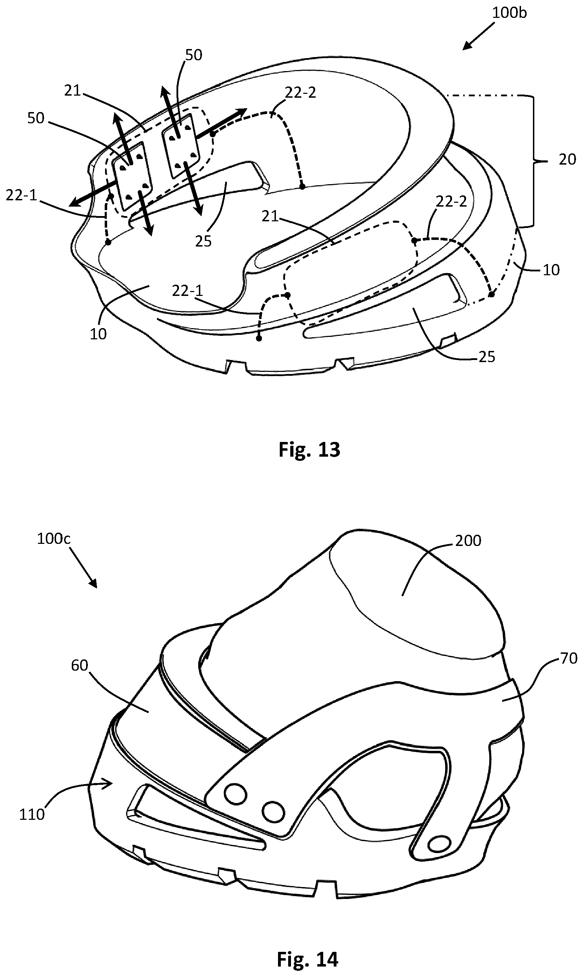

Fig. 13 shows a second embodiment of a shoe 100b for a hoof 200 of an animal in accordance with the invention. This figure will be only discussed in as far as it differs from Fig. 2. The main difference between the two embodiments is that the fixation areas 21 have been enlarged by the provision of two protruding elements 50 per fixation area 21. Alternatively, a larger protruding element 50 instead of two protruding elements 50 may be used. Either way, the fixation areas 21 are enlarged and the elastic connection 22-2 directed towards the front of the shoe 100 is shortened. This embodiment show options for building in force between the hoof and protruding elements 50. This force may be adjusted according to hoof shape, hoof type and use of horse. Further can the angle of protruding needles/pins 51 be changed and the shape of the protruding pins 51 can be changed to optimize the contact force between protruding elements and the hoof.

Fig. 14 shows a third embodiment of a shoe 100c for a hoof 200 of an animal in accordance with the invention. In this embodiment the shoe 100c is provided with a gaiter 70 as illustrated. The gaiter 70 is typically connected with the mounting part 110 of the shoe 100c and may have the function of tightening mechanism and/or locking mechanism to keep the shoe in place. In Fig. 14 the elastic clipping element 60 is shown. However, it is explicitly mentioned here that the principle of the fixation areas with the elastic connections may also be applied together with a tightening mechanism or locking mechanism only (without the elastic clipping element), which may very well have the form of the gaiter 70 in Fig. 14. It is exactly because of this embodiment that the clipping element is not part of claim 1.

The particular embodiments disclosed above are illustrative only, as the invention as defined by the appended claims may be modified and practiced in different but equivalent manners apparent to those skilled in the art having the benefit of the teachings herein. For example, variations are possible in the way parts are connected or coupled. The person skilled in the art may easily find alternative solutions for tightening, tensioning and mounting parts. The shoe may be provided with a sidewall comprising a hard material, such as plastic, for example. In such embodiment the elastic connections may be connected to the hard sidewall instead of to the sole, for example. Many variations are possible in the design of the protruding elements. The depth of the protruding pins/needles may be adapted, as well as the angle these pins/needles are making with the surface of the hoof. Also, the number of pins/needles may be varied. All these design parameters enable the design of the protruding element to be adapted to hoof type, hoof shape, hoof size as well as the application areas of the shoes.

The invention covers all these variants as long as they are covered by the independent claim. No limitations are intended to the details of construction or design herein shown, other than as described in the claims below. It is therefore evident that the particular embodiments disclosed above may be altered or modified and all such variations are considered within the scope of the invention as defined by the appended claims. Accordingly, the protection sought herein is as set forth in the claims below.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage. In the device claims enumerating several means, several of these means may be embodied by one and the same item of hardware.

## Claims

1. Shoe (100) for a hoof (200) of an animal, the shoe (100) comprising a sole (10) for being mounted to an underside of the hoof (200) of said animal, wherein the shoe (100) comprises at least two fixation areas (21) for fixing the shoe (100) to the hoof (200) in operational use, wherein the fixation areas (21) are located on opposite sides (S3, S4) of the hoof (200), wherein each fixation area (21) comprises at least one protruding element (50) provided on an inner side (S0) thereof, wherein the inner side (S0) is defined as the side facing the hoof (200) of the animal when the shoe (100) has been applied to the hoof (200), the at least one protruding element (50) penetrating, in operational use, into the hoof (200) for fixing a position of the fixation area (21) relative to the hoof (200), wherein each fixation area (21) is connected with the sole (10) by at least one elastic connection (22-1, 22-2) for allowing a certain degree of movement between the fixation areas (21) and the sole (10) in operational use, **characterised in that** the sole (10) comprises a flexible and/or elastic material, and **in that** the shoe (100) further comprises a sidewall (20) connected to the sole (10), wherein the elastic connections (22-1, 22-2) are integrated into the sidewall (20), wherein the sidewall (20) comprises a peripheral wall (24) having a predefined receiving recess which matches the size and shape of an elastic clipping element (60) in operational use of the shoe (100), wherein, in operational use, the elastic clipping element (60) extends from a front side (S1) of the shoe (100) and covers the fixation areas (21) for applying by an internal pretension force in the elastic clipping element (60) an inwardly-directed pressure on the fixation areas (21) for pressing the protruding elements (50) into the hoof (200).

2. The shoe (100) according to claim 1, wherein each fixation area (21) is connected to the sole (10) by at least two elastic connections (22-1, 22-2) per fixation area (21).

3. The shoe (100) according to claim 1, wherein the sidewall (20) comprises a peripheral wall (24), wherein the peripheral wall (24) comprises openings (25) on opposite sides (S3, S4) for defining the elastic members (22-1, 22-2) at a rim side (S5) of the sidewall (20).

4. The shoe (100) according to claim 1 or 3, wherein the sidewall (20) covers at least part of a frontside of the hoof (200), in operational use.

5. The shoe (100) according to any one of the preceding claims, wherein each fixation area (21) comprises at least two protruding elements (50) placed side-by-side.

6. The shoe (100) according to any one of the preceding claims, wherein the shoe (100) comprises the elastic clipping element (60).

7. The shoe (100) according to claim 6, wherein the elastic clipping element (60) is U-formed having a first leg (61) and a second leg (62) connected to the first leg (61) via a connecting part (63), wherein ends (60e) of the legs (61, 62) are spaced apart with a predefined distance (D1)

8. The shoe (100) according to 7, wherein the connecting part (63) comprises a joint (65) for allowing pivoting of the legs (61, 62).

9. The shoe (100) according to claim 8, wherein the predefined distance (D1) between the legs (61, 62) of the elastic clipping element (60) is adjustable by setting a pivot angle between the legs (61, 62) for allowing easy placement and removal as well as setting the inwardly-directed pressure on the friction areas (21).

10. The shoe (100) according to any one of the preceding claims, wherein the shoe (100) is completely free of tightening bands or other tightening mechanisms.

## Patentansprüche

1. Hufschuh (100) für einen Huf (200) eines Tieres, wobei der Hufschuh (100) eine Sohle (10) umfasst, die an einer Unterseite des Hufs (200) des Tieres befestigt werden soll, wobei der Hufschuh (100) mindestens zwei Fixierungsbereiche (21) zum Fixieren des Hufschuhs (100) an dem Huf (200) beim betrieblichen Gebrauch umfasst, wobei die Fixierungsbereiche (21) sich auf gegenüberliegenden Seiten (S3, S4) des Hufs (200) befinden, wobei jeder Fixierungsbereich (21) mindestens ein vorstehendes Element (50) umfasst, das an einer inneren Seite (S0) davon bereitgestellt ist, wobei die innere Seite (S0) als die Seite definiert ist, die dem Huf (200) des Tieres zugewandt ist, wenn der Hufschuh (100) auf den Huf (200) aufgebracht wurde, wobei das mindestens eine vorstehende Element (50) beim betrieblichen Gebrauch in den Huf (200) eindringt, um eine Position des Fixierungsbereichs (21) relativ zum Huf (200) zu fixieren, wobei jeder Fixierungsbereich (21) mit der Sohle (10) durch mindestens eine elastische Verbindung (22-1, 22-2) verbunden ist, um beim betrieblichen Gebrauch einen gewissen Bewegungsspielraum zwischen den Fixierungsbereichen (21) und der Sohle (10) zu ermöglichen, **dadurch gekennzeichnet, dass** die Sohle (10) ein flexibles und/oder elastisches Material umfasst, und dass der Hufschuh (100) weiter eine Seitenwand (20) umfasst, die mit der Sohle (10) verbunden ist, wobei die elastischen Verbindungen (22-1, 22-2) in die Seitenwand (20) integriert sind, wobei die Seitenwand (20) eine Umfangswand (24) umfasst, die eine vordefinierte Aufnahmeaussparung aufweist, die der Größe und Form eines elastischen Rastelements (60) beim betrieblichen Gebrauch des Hufschuhs (100) entspricht, wobei beim betrieblichen Gebrauch das elastische Rastelement (60) sich von einer Vorderseite (S1) des Hufschuhs erstreckt (100) und die Fixierungsbereiche (21) abdeckt, um eine innere Vorspannkraft in dem elastischen Rastelement (60) auf die Fixierungsbereiche (21) aufzubringen, um die vorstehenden Elemente (50) in den Huf (200) hinein zu drücken.

2. Hufschuh (100) nach Anspruch 1, wobei jeder Fixierungsbereich (21) über mindestens zwei elastische Verbindungen (22-1, 22-2) pro Fixierungsbereich (21) mit der Sohle (10) verbunden ist.

3. Hufschuh (100) nach Anspruch 1, wobei die Seitenwand (20) eine Umfangswand (24) umfasst, wobei die Umfangswand (24) Öffnungen (25) an gegenüberliegenden Seiten (S3, S4) umfasst, um die elastischen Elemente (22-1, 22-2) an einer Randseite (S5) der Seitenwand (20) zu definieren.

4. Hufschuh (100) nach Anspruch 1 oder 3, wobei die Seitenwand (20) beim betrieblichen Gebrauch mindestens einen Teil der Vorderseite des Hufs (200) abdeckt.

5. Hufschuh (100) nach einem der vorstehenden Ansprüche, wobei jeder Fixierungsbereich (21) mindestens zwei nebeneinander angeordnete vorstehende Elemente (50) umfasst.

6. Hufschuh (100) nach einem der vorstehenden Ansprüche, wobei der Hufschuh (100) das elastische Rastelement (60) umfasst.

7. Hufschuh (100) nach Anspruch 6, wobei das elastische Rastelement (60) U-förmig ist und einen ersten Schenkel (61) und einen zweiten Schenkel (62) aufweist, die über ein Verbindungsteil (63) mit dem ersten Schenkel (61) verbunden sind, wobei die Enden (60e) der Schenkel (61, 62) in einem vordefinierten Abstand (D1) voneinander beabstandet sind

8. Hufschuh (100) nach Anspruch 7, wobei das Verbindungsteil (63) ein Gelenk (65) umfasst, um ein Schwenken der Schenkel (61, 62) zu ermöglichen.

9. Hufschuh (100) nach Anspruch 8, wobei der vordefinierte Abstand (D1) zwischen den Schenkeln (61, 62) des elastischen Rastelements (60) durch Einstellen eines Schwenkwinkels zwischen den Schenkeln (61, 62) justierbar ist, um ein einfaches Anbringen und Entfernen sowie Einstellen des nach innen gerichteten Drucks auf die Reibflächen (21) zu ermöglichen.

10. Hufschuh (100) nach einem der vorstehenden Ansprüche, wobei der Hufschuh (100) vollständig frei von Spannbändern oder sonstigen Spannmechanismen ist.

## Revendications

1. Fer (100) pour sabot (200) d'un animal, le fer (100) comprenant une semelle (10) destinée à être montée sur une face inférieure du sabot (200) dudit animal, dans lequel le fer (100) comprend au moins deux zones (21) de fixation destinées à fixer le fer (100) au sabot (200) en utilisation opérationnelle, dans lequel les zones (21) de fixation sont situées sur des côtés (S3, S4) opposés du sabot (200), dans lequel chaque zone (21) de fixation comprend au moins un élément (50) saillant disposé sur un côté (S0) intérieur de celle-ci, dans lequel le côté (S0) interne est défini comme le côté faisant face au sabot (200) de l'animal lorsque le fer (100) a été appliqué sur le sabot (200), l'au moins un élément (50) saillant pénétrant, en utilisation opérationnelle, dans le sabot (200) pour fixer une position de la zone (21) de fixation par rapport au sabot (200), dans lequel chaque zone (21) de fixation est reliée à la semelle (10) par au moins une liaison (22-1, 22-2) élastique pour permettre un certain degré de mouvement entre les zones (21) de fixation et la semelle (10) en utilisation opérationnelle, **caractérisé en ce que**
la semelle (10) comprend un matériau flexible et/ou élastique, et **en ce que** le fer (100) comprend en outre une paroi latérale (20) reliée à la semelle (10), dans lequel les liaisons (22-1, 22-2) élastiques sont intégrées dans la paroi latérale (20), dans lequel la paroi latérale (20) comprend une paroi (24) périphérique présentant un évidement de réception prédéfini qui correspond à la taille et à la forme d'un élément (60) d'encliquetage élastique en utilisation opérationnelle du fer (100), dans lequel, en utilisation opérationnelle, l'élément (60) d'encliquetage élastique s'étend à partir d'un côté (S1) avant du fer (100) et recouvre les zones (21) de fixation pour appliquer par une force de prétension interne dans l'élément (60) d'encliquetage élastique une pression dirigée vers l'intérieur sur les zones (21) de fixation pour presser les éléments (50) saillants dans le sabot (200).

2. Fer (100) selon la revendication 1, dans lequel chaque zone (21) de fixation est reliée à la semelle (10) par au moins deux liaisons (22-1, 22-2) élastiques par zone (21) de fixation.

3. Fer (100) selon la revendication 1, dans lequel la paroi (20) latérale comprend une paroi (24) périphérique, dans lequel la paroi (24) périphérique comprend des ouvertures (25) sur des côtés (S3, S4) opposés destinés à définir les éléments (22-1, 22-2) élastiques au niveau d'un côté (S5) de rebord de la paroi (20) latérale.

4. Fer (100) selon la revendication 1 ou la revendication 3, dans lequel la paroi (20) latérale recouvre au moins une partie d'une face avant du sabot (200), en utilisation opérationnelle.

5. Fer (100) selon l'une quelconque des revendications précédentes, dans lequel chaque zone (21) de fixation comprend au moins deux éléments (50) saillants placés côte à côte.

6. Fer (100) selon l'une quelconque des revendications précédentes, dans lequel le fer (100) comprend l'élément (60) d'encliquetage élastique.

7. Fer (100) selon la revendication 6, dans lequel l'élément (60) d'encliquetage élastique est en forme de U présentant une première jambe (61) et une seconde jambe (62) reliée à la première jambe (61) par le biais d'une pièce (63) de liaison, dans lequel des extrémités (60e) des jambes (61, 62) sont espacées d'une distance (D1) prédéfinie

8. Fer (100) selon la revendication 7, dans lequel la partie (63) de liaison comprend un joint (65) pour permettre le pivotement des jambes (61, 62).

9. Fer (100) selon la revendication 8, dans lequel la distance (D1) prédéfinie entre les jambes (61, 62) de l'élément (60) d'encliquetage élastique est réglable par la définition d'un angle de pivotement entre les jambes (61, 62) pour permettre un placement et un retrait faciles ainsi que par la définition de la pression dirigée vers l'intérieur sur les zones (21) de friction.

10. Fer (100) selon l'une quelconque des revendications précédentes, dans lequel le fer (100) est complètement exempt de bandes de serrage ou d'autres mécanismes de serrage.
